(19) Europäisches Patentamt
European Patent Office
Office européen des brevets

(11) **EP 4 313 897 B1**

(12) **EUROPÄISCHE PATENTSCHRIFT**

(45) Veröffentlichungstag und Bekanntmachung des Hinweises auf die Patenterteilung:
**26.02.2025   Patentblatt 2025/09**

(21) Anmeldenummer: **22716899.4**

(22) Anmeldetag: **18.03.2022**

(51) Internationale Patentklassifikation (IPC):
***C04B 7/02*** *(2006.01)*

(52) Gemeinsame Patentklassifikation (CPC):
**C04B 7/02;** Y02P 40/121

(86) Internationale Anmeldenummer:
**PCT/EP2022/057196**

(87) Internationale Veröffentlichungsnummer:
**WO 2022/200219 (29.09.2022 Gazette 2022/39)**

(54) **VORRICHTUNG UND VERFAHREN ZUR THERMISCHEN BEHANDLUNG EINES MINERALISCHEN EDUKTS**

DEVICE AND METHOD FOR THE THERMAL TREATMENT OF A MINERAL FEEDSTOCK

DISPOSITIF ET PROCÉDÉ DE TRAITEMENT THERMIQUE D'UNE CHARGE MINÉRALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2021  DE 102021203071**
**26.03.2021  BE 202105236**

(43) Veröffentlichungstag der Anmeldung:
**07.02.2024   Patentblatt 2024/06**

(73) Patentinhaber:
• **thyssenkrupp Polysius GmbH**
**59269 Beckum (DE)**
• **thyssenkrupp AG**
**45143 Essen (DE)**

(72) Erfinder:
• **WILLMS, Eike**
**44309 Dortmund (DE)**
• **BRUNELOT, Patrick**
**13016 Marseille (FR)**
• **UHDE, Martin**
**59320 Ennigerloh (DE)**
• **ONTRUP, Olaf**
**33442 Herzebrock-Clarholz (DE)**
• **KIMMIG, Constantin**
**59494 Soest (DE)**
• **LEMKE, Jost**
**59320 Ennigerloh (DE)**

(74) Vertreter: **thyssenkrupp Intellectual Property GmbH**
**ThyssenKrupp Allee 1**
**45143 Essen (DE)**

(56) Entgegenhaltungen:
DE-A1- 102018 206 674     DE-A1- 3 735 825

**Beschreibung**

Die Erfindung betrifft eine Vorrichtung und ein Verfahren zur thermischen Behandlung von mineralischen Edukten, insbesondere zur Herstellung von Zementklinker.

Eine Anlage zur Klinkerherstellung weist beispielsweise einen Drehrohrofen, einen Calcinator und einen Vorwärmer auf. Während der Materialstrom des Feststoffes, am Anfang kalkhaltige Rohmehlmischung am Ende Zementklinker, vom Vorwärmer über den Calcinator in den Drehrohrofen und meist anschließend in einen Kühler verläuft, strömt das Gas entgegengesetzt vom Drehrohrofen zum Calcinator und von dort in den Vorwärmer. Während im Drehrohrofen der Materialstrom des Klinkers und der Gasstrom gegenläufig sind, werden im Calcinator und im Vorwärmer der Gasstrom und der Materialstrom jeweils streckenweise im Gleichstrom geführt und anschließend in einem Zyklon getrennt. Wird das feste Material im Gleichstrom geführt, muss der Gasstrom in der Lage sein, das Material auch zu tragen, ohne dass das Material ausfällt, sedimentiert oder sich in anderer Art niederschlägt.

Im Calcinator wird auf der einen Seite durch die Verbrennung von Brennstoff Energie in Form von Wärme erzeugt, die auf der anderen Seite durch die endotherme Entsäuerungsreaktion des Edukts, also unter Abgabe von $CO_2$, verbraucht wird. Es ist daher zielführend, Brennstoff und Edukt ortsnah zueinander in den Calcinator einzubringen, wodurch auch Bereiche mit erhöhten Temperaturen vermieden werden.

Als Brennstoff werden üblicherweise flugfähige Brennstoffe, beispielsweise Kohlenstaub, eingesetzt. Es wird jedoch zunehmend wichtig, Ersatzbrennstoffe einzusetzen beziehungsweise deren Anteil zu erhöhen, um beispielsweise die $CO_2$-Bilanz des Gesamtprozesses zu optimieren und auch um kostengünstigere Brennstoffe einsetzen zu können. Hierdurch ist auch eine verbesserte Einbindung der Zementindustrie in die Kreislaufwirtschaft erzielbar. Diese sind jedoch aufgrund ihrer Größenverteilung nicht in allen Fällen flugfähig, beziehungsweise die für die Zerkleinerung zur Herstellung der Flugfähigkeit übersteigt das wirtschaftlich sinnvolle Maß. Um auch die nicht flugfähigen Ersatzbrennstoffe einsetzen zu können, werden derzeit entsprechende Brennkammern seitlich an den Calcinator angesetzt. Ist die Brennkammer beispielsweise seitlich am Calcinator angeordnet ohne dass dort auch Edukt aufgegeben wird, so sind der Ort der Energieerzeugung durch Verbrennung und der Ort des Energieverbrauchs durch Entsäuerung räumlich getrennt.

Aus der DE 10 2018 206 673 A1 ist ein Verfahren zur Herstellung von Zementklinker mit erhöhtem Sauerstoffanteil bekannt.

Aus der DE 10 2018 206 674 A1 ist ein weiteres Verfahren zur Herstellung von Zementklinker mit erhöhtem Sauerstoffanteil bekannt.

Aus der DE 37 35 825 A1 ist eine Vorrichtung zum Kalzinieren von pulverförmigen Materialien bekannt.

Aufgabe der Erfindung ist es, eine Vorrichtung und ein Verfahren bereitzustellen, bei dem auch ein sehr grober Brennstoff direkt im Calcinator verbrannt werden kann.

Gelöst wird diese Aufgabe durch die Vorrichtung mit den in Anspruch 1 angegebenen Merkmalen sowie durch das Verfahren mit den in Anspruch 12 angegebenen Merkmalen. Vorteilhafte Weiterbildungen ergeben sich aus den Unteransprüchen, der nachfolgenden Beschreibung sowie den Zeichnungen.

Die erfindungsgemäße Vorrichtung dient zur thermischen Behandlung eines mineralischen Edukts. Bevorzugt handelt es sich um eine Vorrichtung zur Herstellung von Zementklinker. Es kann die Vorrichtung aber auch für die thermische Behandlung von Tonen oder beispielsweise von Lithium-Erzen genutzt werden. Im Folgenden wird die Herstellung von Zementklinker als Beispiel verwendet. Die Vorrichtung weist einen Calcinator auf. Üblicherweise weist die Vorrichtung weiter einen Drehofen auf. Dieser liegt bezüglich des Materialstroms (Edukt zu Produkt) hinter dem Calcinator und bezüglich des Gasstromes vor dem Calcinator. Der Drehofen kann aber auch bei anderen thermischen Behandlungen entfallen und sich beispielsweise ein Kühler direkt an den Calcinator anschließen. Üblicherweise weist die Vorrichtung weiter einen Vorwärmer auf. Der Vorwärmer liegt bezüglich des Materialstroms (Edukt zu Produkt) vor dem Calcinator und bezüglich des Gasstromes hinter dem Calcinator. Der Vorwärmer besteht beispielsweise aus einigen in Reihe geschalteten Gleichstromwärmetauschern mit nachgelagerten Abscheidezyklonen. Der Calcinator weist wenigstens einen ersten Calcinatorabschnitt und einen zweiten Calcinatorabschnitt auf. Der erste Calcinatorabschnitt ist senkrecht angeordnet und der zweite Calcinatorabschnitt ist schräg angeordnet. Schräg bedeutet, dass der Gasstrom durch den zweiten Calcinatorabschnitt nicht parallel zur Erdoberfläche noch im 90 ° Winkel zur Erdoberfläche strömt. Der zweite Calcinatorabschnitt weist einen Winkel $\alpha$ zwischen der Horizontalen und der Strömungsrichtung des zweiten Calcinatorabschnitts auf. Die Horizontale ist parallel zur Erdoberfläche. Der Winkel $\alpha$ liegt zwischen 20 ° und 80 °. Der erste Calcinatorabschnitt weist einen ersten hydraulischen Durchmesser $d_{h,1}$ auf und der zweite Calcinatorabschnitt weist einen zweiten hydraulischen Durchmesser $d_{h,2}$ auf. Der zweite hydraulische Durchmesser $d_{h,2}$ ist kleiner oder gleich dem ersten hydraulischen Durchmesser $d_{h,1}$ multipliziert mit dem Sinus des Winkels $\alpha$.

$$d_{h,2} \leq d_{h,1} \cdot sin(\alpha)$$

Der hydrodynamische Durchmesser $d_h$ ist das Vierfache des Quotienten aus der durchströmten Fläche A quer zur Strömungsrichtung geteilt durch den durchströmten Umfang P.

$$d_h = 4 \cdot \frac{A}{P}$$

Betrachtet man einen rohrförmigen vollständig von Gas durchströmten Körper, beispielsweise einen rohrförmigen ersten Calcinatorabschnitt mit dem Radius r, so ist die durchströmte Fläche $A_{Rohr}$ gleich dem kreisförmigen Querschnitt $A_{Rohr} = \pi \cdot r^2$ und der durchströmte Umfang $P_{Rohr}$ gleich dem Kreisumfang $P_{Rohr} = 2 \cdot \pi \cdot r$. Somit ist der hydrodynamische Durchmesser eines Rohres $d_{h,Rohr} = 2 \cdot r$ und damit der Durchmesser des Rohres. Für andere Geometrien ergibt sich analog eine charakteristische Länge.

Bei der Betrachtung des zweiten hydraulischen Durchmesser $d_{h,2}$ ist darauf zu achten, dass bei der vorgesehenen Verwendung eines festen Brennstoffes dieser ein festes Bett innerhalb des zweiten Calcinatorabschnitts ergibt, was wiederrum dazu führt, dass bei regulärem Betrieb nicht die gesamte Querschnittsfläche des zweiten Calcinatorabschnitts dem Gasstrom zur Verfügung steht, sondern nur der um das Bett des festen Brennstoffs verminderte Querschnitt. Unter festen Bett sind im Sinne der Erfindung alle Arten von Schichten aus festem Material zu verstehen, umfassend Haufwerk oder Schüttschichten. Ebenso ist der durchströmte Umfang P nicht der Umfang des zweiten Calcinatorabschnitts, sondern der durch das Bett des Brennstoffes und den oberen Teil des zweiten Calcinatorabschnitts vom Gasstrom durchströmte Umfang P. Wird jedoch ein flüssiger Brennstoff verwendet, beispielsweise hochviskose Ölrückstände, so kann dessen Schichtdicke unter Umständen vernachlässigbar sein, sodass in diesem Fall auf die Geometrie des zweiten Calcinatorabschnitts in ausreichender Näherung herangezogen werden kann.

Der Vorteil der erfindungsgemäßen Vorrichtung ist, dass durch die Anpassung des Querschnittes in Abhängigkeit des Winkels $\alpha$ des zweiten Calcinatorabschnittes die Strömungsgeschwindigkeit entlang der Strömungsrichtung so erhöht wird, dass die Geschwindigkeitskomponente in z-Richtung, also senkrecht zur Erdoberfläche wenigstens gleich groß mit der Strömungsgeschwindigkeit im senkrechten ersten Calcinatorabschnitt ist. Da die Geschwindigkeitskomponente in z-Richtung im zweiten Calcinatorabschnitt damit wenigstens genauso hoch ist wie die Geschwindigkeitskomponente in z-Richtung im ersten Calcinatorabschnitt ist die Tragfähigkeit des Gasstromes für das Edukt in beiden Calcinatorabschnitten wenigstens gleich groß und ein Abscheiden des Edukts aus dem Gasstrom im schräg angeordneten zweiten Calcinatorabschnitt kann vermieden werden. Damit geht kein mineralisches Edukt dadurch verloren, dass es sich dort beispielsweise auf oder in einem festen Brennstoff ablagert. Durch die Verjüngung und damit insgesamt höhere Strömungsgeschwindigkeit im zweiten Calcinatorabschnitt wird somit der Effekt der Reduzierung der Geschwindigkeitskomponente in z-Richtung im zweiten Calcinatorabschnitt durch die Schräglage wenigstens kompensiert und damit durch den Zusammenhang zwischen Durchmesser $d_h$ und Winkels $\alpha$ erfindungsgemäß die Tragfähigkeit wenigstens konstant gehalten.

In einer weiteren Ausführungsform der Erfindung sind der erste Calcinatorabschnitt und der zweite Calcinatorabschnitt dazu ausgebildet, von einem Gasstrom von unten nach oben durchströmt zu werden.

In einer weiteren Ausführungsform der Erfindung ist der erste Calcinatorabschnitt unterhalb des zweiten Calcinatorabschnitts angeordnet. Bevorzugt ist der erste Calcinatorabschnitt direkt angrenzend an den zweiten Calcinatorabschnitt angeordnet.

In einer weiteren Ausführungsform der Erfindung weist die Vorrichtung einen dritten Calcinatorabschnitt auf. Der dritte Calcinatorabschnitt ist senkrecht angeordnet. Der dritte Calcinatorabschnitt ist oberhalb des zweiten Calcinatorabschnittes angeordnet. Bevorzugt ist der zweite Calcinatorabschnitt direkt angrenzend an den dritten Calcinatorabschnitt angeordnet.

In einer weiteren Ausführungsform der Erfindung weist der zweite Calcinatorabschnitt eine erste zweite Eduktzuführung auf. Die erste zweite Eduktzuführung ist in den unteren 20 % des zweiten Calcinatorabschnitts angeordnet ist, also am Eintritt des Gasstromes. Die erste zweite Eduktzuführung führt das Edukt von oben in den Gasstrom des zweiten Calcinatorabschnitts oder seitlich in den Gasstrom des zweiten Calcinatorabschnitts zu. Edukt für den Calcinator ist insbesondere das in einem Vorwärmer vorgewärmte thermisch zu behandelnde Material, beispielsweise und vorzugsweise ein Mehl zur Klinkerherstellung. Dieses soll auch umfassen, dass die erste zweite Eduktzuführung im ersten Calcinatorabschnitt unmittelbar vor dem zweiten Calcinatorabschnitt angeordnet ist.

Üblicherweise weist auch der erste Calcinatorabschnitt wenigstes eine erste erste Eduktzuführung auf. Das Edukt wird dem Calcinator üblicherweise und bevorzugt somit in Teilportionen zugeführt, um eine räumliche Verteilung der Decarbonatisierung über den gesamten Calcinator zu verteilen und so auch eine Verteilung des Energieverbrauchs über den Calcinator zu erzielen. Bei flugfähigen Brennstoffen erfolgt dieses räumlich benachbart. Somit wird über die erste erste Eduktzuführung eine erste Teilmenge Edukt zugeführt und über die erste zweiter Eduktzuführung eine zweite Teilmenge.

Entsprechend kann in einem dritten Calcinatorabschnitt vorzugsweise wenigstens eine erste dritte Eduktzuführung angeordnet sein.

In einer weiteren Ausführungsform der Erfindung weist der zweite Calcinatorabschnitt zusätzlich eine zweite zweite Eduktzuführung auf. Die zweite zweite Eduktzuführung ist im mittleren Bereich des zweiten Calcinatorabschnitts angeordnet, wobei die zweite zweite Eduktzuführung Edukt von oben in den Gasstrom des zweiten Calcinatorabschnitts oder seitlich in den Gasstrom des zweiten Calcinatorabschnitts zuführt. Hierdurch wird das Edukt räumlich verteilter zugeführt, was auch dazu führt, dass der Energieverbrauch durch die Decarbonatisierung räumlich verteilter erfolgt und somit eine Vergleichmäßigung der Temperatur und damit der Reaktionsbedingungen erfolgt. Selbstverständlich kann der zweite Calcinatorabschnitt auch weitere zweite Eduktzuführungen aufweisen, um eine weitere Vergleichmäßigung zu erreichen. Bevorzugt erfolgt die Zuführung des Edukts über die erste zweite Eduktzuführung in konstanter Weise, die zweite zweite Eduktzuführung wird variabel verwendet, um insbesondere die zugeführte Menge an Edukt an die üblicherweise schwankende freigesetzte Energiemenge eines Ersatzbrennstoffes dynamisch anzupassen. Hierzu würde bei einem Ersatzbrennstoff mit geringerem Brennwert weniger Edukt über die zweite zweite Eduktzuführung zugeführt werden und bei einem Ersatzbrennstoff mit höherem Brennwert mehr Edukt über die zweite zweite Eduktzuführung zugeführt werden.

In einer weiteren Ausführungsform der Erfindung weist der zweite Calcinatorabschnitt zusätzlich eine dritte zweite Eduktzuführung auf. Die dritte zweite Eduktzuführung ist in den oberen 20 % des zweiten Calcinatorabschnitts angeordnet, wobei die dritte zweite Eduktzuführung Edukt von oben in den Gasstrom des zweiten Calcinatorabschnitts oder seitlich in den Gasstrom des zweiten Calcinatorabschnitts zuführt. Hierdurch wird das Edukt räumlich verteilter zugeführt, was auch dazu führt, dass der Energieverbrauch durch die Decarbonatisierung räumlich verteilter erfolgt und somit eine Vergleichmäßigung der Temperatur und damit der Reaktionsbedingungen erfolgt. Selbstverständlich kann der zweite Calcinatorabschnitt auch weitere zweite Eduktzuführungen aufweisen, um eine weitere Vergleichmäßigung zu erreichen.

In einer weiteren Ausführungsform der Erfindung ist am oberen Ende des zweiten Calcinatorabschnitts eine zweite Brennstoffzufuhr für einen festen Brennstoff angeordnet.

Beispielsweise und bevorzugt kann ein Ersatzbrennstoff über die zweite Brennstoffzufuhr zugeführt werden. Beispiele für Ersatzbrennstoffe sind Abfälle aus Haushalten, Industrie oder Gewerbe, Altreifen, Klärschlamm und Biomasse. Der Heizwert von Ersatzbrennstoffen kann sehr unterschiedlich sein. Ersatzbrennstoffe können daher auch als Mischung unterschiedlicher Fraktionen eingebracht werden, um einen gewissen Brennwert zu erreichen. Da die Fraktionen mit einem geringeren Brennwert und gröberer Größenverteilung meist günstiger sind, wird hierdurch auch eine Kostenoptimierung erreicht. Durch die Schrägung des zweiten Calcinatorabschnittes ist es möglich, somit auch nicht flugfähige Ersatzbrennstoff direkt in einem Calcinator in unmittelbarer Nähe zur chemischen Reaktion des Edukts zum Produkt zu verbrennen und die Energie damit ortsnah zu deren Umsetzung bereit zu stellen.

Um bestimmte Ersatzbrennstoffe besser verbrennen zu können, kann die untere Seite des zweiten Calcinatorabschnitts stufenförmig ausgebildet sein oder die untere Seite des zweiten Calcinatorabschnitts kann einen Vor- oder Rückschubrost aufweisen, wobei auch ein Vor- oder Rückschubrost stufenförmig ausgebildet sein kann. Die untere Seite ist im Sinne der Erfindung der Boden, der Bereich, auf dem ein Feststoff durch die Schwerkraft entlangrutschen würde. Analog wäre die obere Seite und die seitlichen Seiten dann der Teil, der den Gasstrom nach oben beziehungsweise seitlich begrenzt.

In einer weiteren Ausführungsform der Erfindung weist der zweite Calcinatorabschnitt einen Winkel $\alpha$ zwischen der Horizontalen und der Strömungsrichtung des zweiten Calcinatorabschnitts auf, wobei der Winkel $\alpha$ zwischen 30 ° und 70 °, bevorzugt zwischen 35 ° und 60 °, weiter bevorzugt zwischen 40 ° und 55 °, besonders bevorzugt zwischen 40 ° und 50 °, liegt. Hier ist ein Optimum zu wählen. Je steiler der zweite Calcinatorabschnitt ist, um so größer ist die Geschwindigkeitskomponente des Gasstromes in z-Richtung und um so leichter verbleiben die Partikel im Gasstrom. Auf der Gegenseite ist ein flacher Aufbau gerade für Ersatzbrennstoffe mit grober Größenverteilung und/oder hohem Feuchtigkeitsanteil vorteilhaft.

In einer weiteren Ausführungsform der Erfindung ist der zweite Calcinatorabschnitt unterhalb des ersten Calcinatorabschnitts angeordnet und parallel zum zweiten Calcinatorabschnitt ist ein regelbarer Bypass angeordnet. Beispielsweise kann auch das untere Ende des zweiten Calcinatorabschnitts in eine Flucht mit dem ersten Calcinatorabschnitt liegen. In diesem Fall sind das obere Ende des zweiten Calcinatorabschnitts und das untere Ende des ersten Calcinatorabschnitts beispielsweise durch ein waagerechtes Verbindungsstück miteinander verbunden, wobei der regelbare Bypass dann direkt senkrecht unter dem ersten Calcinatorabschnitt angeordnet ist.

In einem weiteren Aspekt betrifft die Erfindung ein Verfahren zum Betreiben einer Vorrichtung zur thermischen Behandlung eines mineralischen Edukts. Bevorzugt handelt es sich um ein Verfahren zum Betreiben einer Vorrichtung zur Herstellung von Zementklinker. Es kann die Vorrichtung aber auch für die thermische Behandlung von Tonen oder beispielsweise von Lithium-Erzen genutzt werden. Im Folgenden wird die Herstellung von Zementklinker als Beispiel verwendet. Das Verfahren wird in einer Vorrichtung mit einem Calcinator mit einem senkrechten ersten Calcinatorabschnitt und einem schrägen zweiten Calcinatorabschnitt durchgeführt. Vorzugsweise wird das Verfahren in einer erfindungsgemäßen Vorrichtung durchgeführt. Während des Betriebens wird ein Gasstrom durch den ersten Calcinatorabschnitt und den zweiten Calcinatorabschnitt geführt. Beispielsweise und bevorzug stammt der Gasstrom aus einem Drehrohrofen. Beispielsweise und bevorzugt enthält der Gasstrom hauptsächlich Sauerstoff und dazu das im Drehrohrofen durch Verbrennung und die Restentsäuerung des Edukts (üblicher Weise um die 10 % der gesamten Entsäuerung) entstandenen $CO_2$. Bevorzugt enthält der Gasstrom weniger als 20 Vol.-% Stickstoff, besonders bevorzugt weniger als 15 Vol.-% Stickstoff, bevorzugt etwa 50 bis 70 Vol.-% Sauerstoff. Die vorgenannten Werte beziehen sich auf trockenes Gas, also ohne Berücksichtigung des Wassers. Bevorzugt enthält damit der eintretende Gasstrom ausreichend Sauerstoff für die Verbrennung der in den Calcinator zugeführten Brennstoffe. Die Vorrichtung wird erfindungsgemäß so betrieben, dass die Froude-Zahl Fr an jeder Stelle des zweiten Calcinatorabschnitts gleich oder größer ist als das Minimum der Froude-Zahl Fr des ersten Calcinatorabschnittes ist. Die Froude-Zahl Fr ist die Geschwindigkeitskomponente des Gasstroms in vertikaler Richtung $v_z$ dividiert durch die Wurzel aus dem Produkt der Erdbeschleunigung g mit dem hydraulischen Durchmesser $d_h$.

$$Fr = \frac{v_z}{\sqrt{g \cdot d_h}}$$

mit:

$$d_h = 4 \cdot \frac{A}{P}$$

Der hydraulische Durchmesser ist das vierfache des Quotienten aus dem durchströmten Fläche A quer zur Strömungsrichtung geteilt durch den durchströmten Umfang P ist.

Während im senkrechten ersten Calcinatorabschnitt die Geschwindigkeitskomponente des Gasstroms in vertikaler Richtung $v_z$ gleich der Strömungsgeschwindigkeit des Gasstromes v ist, ist im schrägen zweiten Calcinatorabschnitt der Winkel $\alpha$ zu berücksichtigen. Die Geschwindigkeitskomponente des Gasstroms in vertikaler Richtung $v_z$ ist hier die Strömungsgeschwindigkeit des Gasstromes v multipliziert mit dem Sinus des Winkels $\alpha$.

$$v_z = v \cdot sin(\alpha)$$

Hierbei ist jedoch zu berücksichtigen, dass die Strömungsgeschwindigkeit keine Konstante ist. Die Strömungsgeschwindigkeit wird innerhalb des Calcinators durch verschiedene Prozesse- verändert. Zum einen führen Temperaturunterschiede zu Unterschieden. In Bereichen mit höherer Temperatur möchte das Gas einen größeren Raum einnehmen, was zu einer Erhöhung der Geschwindigkeit v führt. Ebenso führt die Entsäuerung des Edukts zu einer Abgabe von $CO_2$, was die Stoffmenge erhöht und somit auch zu einer Erhöhung der Strömungsgeschwindigkeit führt. Weiter kann auch aus dem Brennstoff eine Erhöhung der Stoffmenge resultieren, beispielsweise auf freigesetztem oder bei der Verbrennung entstehendem Wasser. Diese Effekte führen dazu, dass die Froude-Zahl bei einer konstanten Geometrie innerhalb eines Calcinatorabschnitts nicht konstant ist, sondern ortsabhängig verschieden ist.

Da die Froude-Zahl als Maß für die Tragfähigkeit des Gasstromes für das als Feststoff vorliegende Edukt zu betrachten ist, und die Tragfähigkeit im zweiten Calcinatorabschnitt wenigstens so hoch sein muss wie im ersten Calcinatorabschnitt, muss die Froude-Zahl im zweiten Calcinatorabschnitt überall größer sein als das Minimum der Froude-Zahl im ersten Calcinatorabschnitt. Hierbei ist jedoch zu berücksichtigen, dass durch den Neigungswinkel $\alpha$ nicht die ganze Strömungsgeschwindigkeit v, sondern nur deren z-Komponente $v_z$, in die Berechnung eingeht und auch nur zur Tragfähigkeit beiträgt. Hierbei wird nur auf das Minimum im ersten Calcinatorabschnitt abgezielt, da auch an diesem Punkt die Tragfähigkeit ausreichend sein muss. Eine Erhöhung der Froude-Zahl, beispielsweise durch Freisetzung von $CO_2$ bei der Entsäuerung wird lokal zu höheren Werten führen, wenn man von einer konstanten Geometrie innerhalb des ersten Calcinatorabschnitts ausgeht.

Besonders bevorzugt wird der Calcinator mit einer turbulenten Strömung betrieben. Hierdurch weist das Geschwindigkeitsprofil der Strömung nur geringe Schwankungen über die Breite der Strömung auf. Bei einer laminaren Durchströmung weist die Geschwindigkeit des Gasstromes eine Verteilung über die Breite auf, die am Rand null und in der Mitte ein Maximum aufweist. Hierdurch wäre die Tragfähigkeit ortsabhängig, was die Prozessführung kompliziert.

In einer weiteren Ausführungsform der Erfindung wird der Calcinator mit einer Atmosphäre mit weniger als 25 % Stickstoff, bevorzugt mit weniger als 15 % Stickstoff, weiter bevorzugt mit weniger als 10 % Stickstoff, besonders bevorzugt mit weniger als 5 % Stickstoff betrieben.

In einer weiteren Ausführungsform der Erfindung wird die Froude-Zahl im zweiten Calcinatorabschnitt größer als 0,7, bevorzugt größer als 2, gewählt. Weiter wird die Froude-Zahl im zweiten Calcinatorabschnitt kleiner als 9, bevorzugt kleiner als 4, gewählt.

In einer weiteren Ausführungsform der Erfindung wird im zweiten Calcinatorabschnitt Edukt an wenigstens zwei Positionen über eine erste zweite Eduktzuführung und eine zweite zweite Eduktzuführung zugeführt. Dieses erfolgt entlang der Strömungsrichtung zueinander beabstandet. Hierdurch wird eine Vergleichmäßigung der Reaktion und damit des Energieverbrauchs und damit der Temperatur erreicht.

In einer weiteren Ausführungsform der Erfindung wird im zweiten Calcinatorabschnitt ein fester Brennstoff zugeführt und verbrannt. Beispielsweise und bevorzugt kann ein Ersatzbrennstoff über die zweite Brennstoffzufuhr zugeführt werden. Beispiele für Ersatzbrennstoffe sind Abfälle aus Haushalten, Industrie oder Gewerbe, Altreifen, Klärschlamm und Biomasse. Der Heizwert von Ersatzbrennstoffen kann sehr unterschiedlich sein. Ersatzbrennstoffe können daher auch als Mischung unterschiedlicher Fraktionen eingebracht werden, um einen gewissen Brennwert zu erreichen. Da die Fraktionen mit einem geringeren Brennwert meist günstiger sind, wird hierdurch auch eine Kostenoptimierung erreicht. Durch die Schrägung des zweiten Calcinatorabschnittes ist es möglich, somit auch nicht flugfähige Ersatzbrennstoff direkt in einem Calcinator in unmittelbarer Nähe zur chemischen Reaktion des Edukts zum Produkt zu verbrennen und die Energie damit ortsnah zu deren Umsetzung bereit zu stellen. Um bestimmte Ersatzbrennstoffe besser verbrennen zu können, kann die untere Seite des zweiten Calcinatorabschnitts stufenförmig ausgebildet sein oder die untere Seite des zweiten Calcinatorabschnitts kann mittels eines Vor- oder Rückschubrost gefördert werden, wobei auch ein Vor- oder Rückschubrost stufenförmig ausgebildet sein kann.

In einer weiteren Ausführungsform der Erfindung wird im zweiten Calcinatorabschnitt ein fester Brennstoff mit einer Stückgröße von wenigstens 90 % der Masse des Brennstoffes von mehr als 50 mm, bevorzugt mehr als 70 mm, besonders bevorzugt von 100 mm, zugeführt.

In einer weiteren Ausführungsform der Erfindung wird im ersten Calcinatorabschnitt ein flugfähiger Brennstoff zugeführt. Außerdem wird im ersten Calcinatorabschnitt über eine erste Eduktzuführung Edukt zugeführt. Bevorzugt werden Brennstoff und Edukt räumlich zueinander benachbart zugeführt, um Energieerzeugung und Energieverbrauch räumlich miteinander zu verbinden.

Nachfolgend ist die erfindungsgemäße Vorrichtung anhand eines in den Zeichnungen dargestellten Ausführungsbeispiels näher erläutert.

Fig. 1 Vorrichtung zur thermischen Behandlung eines mineralischen Edukts
Fig. 2 erster beispielhafter Calcinator
Fig. 3 zweiter beispielhafter Calcinator
Fig. 4 dritter beispielhafter Calcinator
Fig. 5 vierter beispielhafter Calcinator

Alle Darstellungen sind rein schematisch, nicht maßstabsgerecht und dienen nur zur Verdeutlichung der Erfindungsmerkmale.

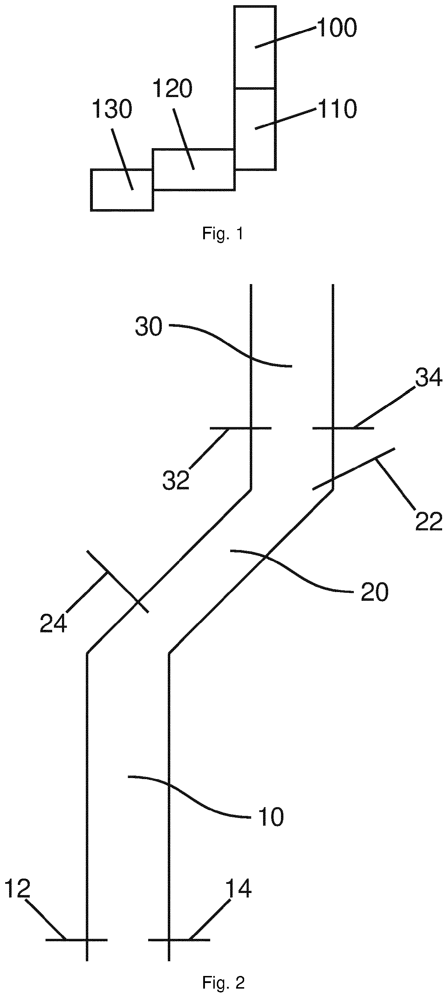

In Fig. 1 ist eine Vorrichtung zur thermischen Behandlung eines mineralischen Edukts, beispielsweise einer Anlage zur Herstellung von Zementklinker. Die Anlage weist einen Vorwärmer 100, einen Calcinator 110, einen Drehrohrofen 120 und einen Kühler 130 auf. Das Material, beispielsweise Rohmehl aus Kalkstein, wird oben aufgegeben, durchläuft die Anlage in der genannten Reihenfolge und kann dem Kühler 130 als Klinker entnommen werden. Der Gasstrom wird entgegen dem Materialstrom vom Drehrohrofen 120 in den Calcinator 110 geleitet und von dort in den Vorwärmer 100.

Daher tritt in den im Folgenden gezeigten vier beispielhaften Calcinatorausführungsformen der Gasstrom von unten aus dem Drehrohrofen 120 kommend ein und strömt nach oben. Der Calcinator 110 weist jeweils am oberen Ende wenigstens einen in den Ausführungsbeispielen nicht gezeigten Zyklonabscheider auf.

Die Bezugzeichen werden für gleiche Elemente im Folgenden gleich verwendet und in der Beschreibung auf die Unterschiede der Ausführungsformen eingegangen.

Fig. 2 zeigt einen ersten Calcinatorabschnitt 10, welcher senkrecht angeordnet ist, darüber einen zweiten Calcinatorabschnitt 20, welcher schräg in einem Winkel von 45 ° angeordnet ist und darüber einen dritten Calcinatorabschnitt 30, welcher senkrecht angeordnet ist. Der erste Calcinatorabschnitt 10 weist eine erste Brennstoffzufuhr 12 für einen flugfähigen Brennstoff, beispielsweise Kohlenstaub, sowie eine erste erste Eduktzuführung 14 auf, über welche Edukt aus dem Vorwärmer 100 zugeführt wird. Durch die Verbrennung des Brennstoffes im ersten Calcinatorabschnitt 10 entsteht Energie, welche für den Entsäuerungsprozess des Edukts verwendet wird, sodass $CO_2$ erzeugt wird. Im zweiten Calcinatorabschnitt 20 wird von oben über die zweite Brennstoffzufuhr 22 ein fester Brennstoff, beispielsweise über eine Schnecke, zugeführt, der dann auf der schrägen Fläche des zweiten Calcinatorabschnitts 20 verbrennt. Verbrennungsreste, beispielsweise Metallbestandteile des Brennstoffs, fallen durch den ersten Calcinatorabschnitt 10 und können unter diesem dann entnommen werden. Der zweite Calcinatorabschnitt 20 weist weiter eine erste zweite Eduktzuführung 24 auf, über die ebenfalls Edukt aus dem Vorwärmer zugegeben werden kann. Oberhalb des zweiten Calcinatorabschnitts 20 ist ein dritter Calcinatorabschnitt 30 angeordnet, welcher eine dritte Brennstoffzufuhr 32 und eine erste dritte Eduktzuführung 34 aufweist.

Wie in Fig. 2 angedeutet, ist der Querschnitt des zweiten Calcinatorabschnitts 20 geringer als der Querschnitt des ersten Calcinatorabschnitts 10. Beispielsweise ist der Querschnitt um etwa 30 % kleiner als der Querschnitt des ersten Calcinatorabschnitts 10, was dem Sinus von 45 ° entspricht.

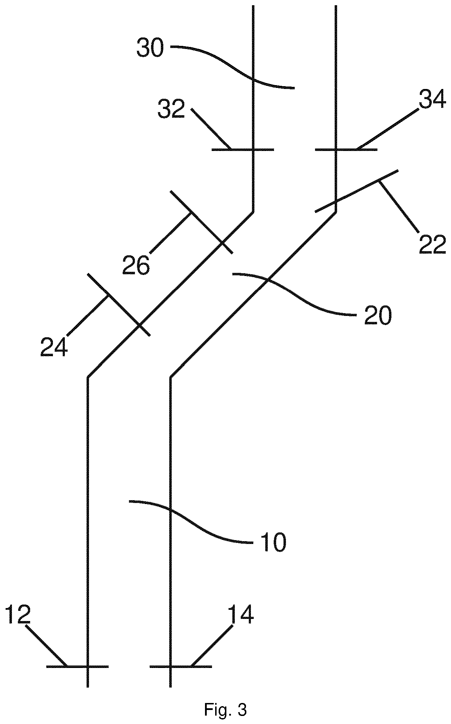

In der zweiten in Fig. 3 gezeigten Ausführungsform des Calcinators 110 weist der zweite Calcinatorabschnitt 20 zusätzlich zu der ersten in Fig. 2 gezeigten Ausführungsform eine zweite zweite Eduktzuführung 26 auf, wodurch eine bessere Vergleichmäßigung des Energieverbrauchs und dadurch der Temperatur im zweiten Calcinatorabschnitt 20 erzielt werden kann.

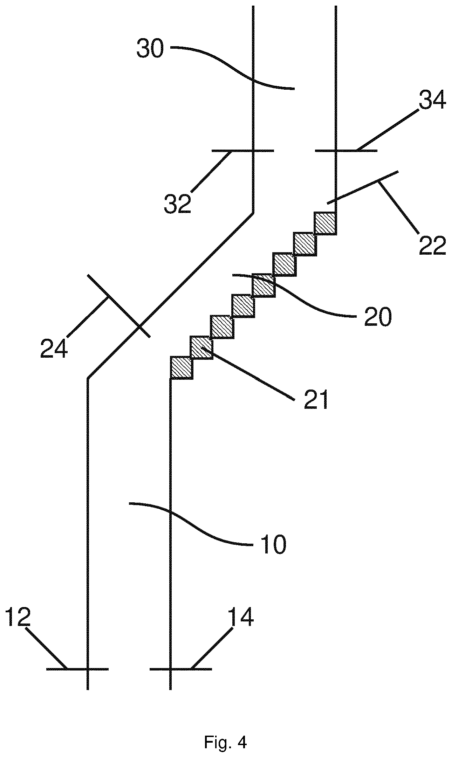

In der dritten in Fig. 4 gezeigten Ausführungsform des Calcinators 110 weist der zweite Calcinatorabschnitt 20 Stufen 21 für die Verbrennung eines festen Brennstoffes auf. Die Stufen 21 können wie im gezeigten Beispiel eben angeordnet sein, die Stufen 21 können aber auch in Strömungsrichtung oder gegen die Strömungsrichtung geneigt angeordnet sein.

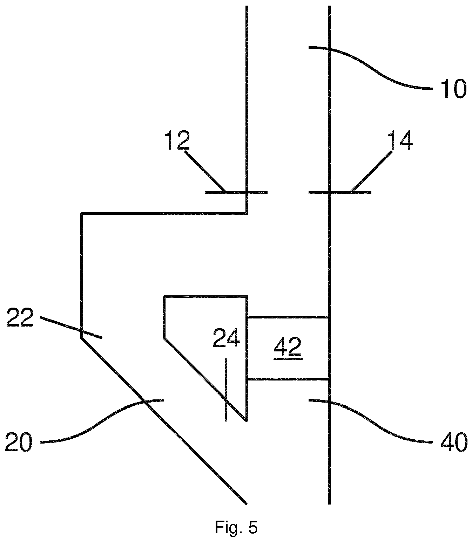

Die vierte in Fig. 5 gezeigten Ausführungsform des Calcinators 110 ist deutlich anders aufgebaut. Zunächst wird der Gasstrom geteilt und nur ein Teilstrom durch den zweiten Calcinatorabschnitt 20 geführt. Ein weiterer Teilstrom gelangt durch einen Bypass und ein Durchflussregelventil 42 an den zweiten Calcinatorabschnitt vorbei und wird mit dem aus dem zweiten Calcinatorabschnitt 20 austretendem Gasstrom wieder vereint in den ersten Calcinatorabschnitt 10 geführt.

Bezugszeichen

| | |
|--|--|
| 10 | erster Calcinatorabschnitt |
| 12 | erste Brennstoffzufuhr |
| 14 | erste erste Eduktzuführung |
| 20 | zweiter Calcinatorabschnitt |
| 21 | Stufen |
| 22 | zweite Brennstoffzufuhr |
| 24 | erste zweite Eduktzuführung |
| 26 | zweite zweite Eduktzuführung |
| 30 | dritter Calcinatorabschnitt |
| 32 | dritte Brennstoffzufuhr |
| 34 | erste dritte Eduktzuführung |
| 40 | Bypass |
| 42 | Durchflussregelventil |
| 100 | Vorwärmer |
| 110 | Calcinator |
| 120 | Drehrohrofen |
| 130 | Kühler |

**Patentansprüche**

1. Vorrichtung zur thermischen Behandlung eines mineralischen Edukts, wobei die Vorrichtung einen Calcinator (110) aufweist, wobei der Calcinator (110) wenigstens einen ersten Calcinatorabschnitt (10) und einen zweiten Calcinatorabschnitt (20) aufweist, wobei der erste Calcinatorabschnitt (10) senkrecht angeordnet ist, wobei der zweite Calcinatorabschnitt (20) schräg angeordnet ist, wobei der zweite Calcinatorabschnitt (20) einen Winkel $\alpha$ zwischen der Horizontalen und der Strömungsrichtung des zweiten Calcinatorabschnitts (20) aufweist, wobei der Winkel $\alpha$ zwischen 20 ° und 80 ° liegt, wobei der erste Calcinatorabschnitt (10) einen ersten hydraulischen Durchmesser $d_{h,1}$ aufweist, wobei der zweite Calcinatorabschnitt (20) einen zweiten hydraulischen Durchmesser $d_{h,2}$ aufweist, wobei der zweite hydraulische Durchmesser $d_{h,2}$ kleiner oder gleich dem ersten hydraulischen Durchmesser $d_{h,1}$ multipliziert mit dem Sinus des Winkels $\alpha$ ist.

2. Vorrichtung nach Anspruch 1, **dadurch gekennzeichnet, dass** der erste Calcinatorabschnitt (10) und der zweite Calcinatorabschnitt (20) dazu ausgebildet sind, von einem Gasstrom von unten nach oben durchströmt zu werden.

3. Vorrichtung nach einem der vorstehenden Ansprüche, **dadurch gekennzeichnet, dass** der erste Calcinatorabschnitt (10) unterhalb des zweiten Calcinatorabschnitts (20) angeordnet ist.

4. Vorrichtung nach einem der vorstehenden Ansprüche, **dadurch gekennzeichnet, dass** die Vorrichtung einen dritten Calcinatorabschnitt aufweist, wobei der dritte Calcinatorabschnitt senkrecht angeordnet ist, wobei der dritte Calcinatorabschnitt oberhalb des zweiten Calcinatorabschnittes (20) angeordnet ist.

5. Vorrichtung nach einem der vorstehenden Ansprüche, **dadurch gekennzeichnet, dass** der zweite Calcinatorabschnitt (20) eine erste zweite Eduktzuführung (24) aufweist, wobei die erste zweite Eduktzuführung (24) in den unteren 20 % des zweiten Calcinatorabschnitts (20) angeordnet ist, wobei die erste zweite Eduktzuführung (24) Edukt von oben in den Gasstrom des zweiten Calcinatorabschnitts (20) oder seitlich in den Gasstrom des zweiten Calcinatorabschnitts (20) zuführt.

6. Vorrichtung nach Anspruch 5, **dadurch gekennzeichnet, dass** der zweite Calcinatorabschnitt (20) eine zweite zweite Eduktzuführung (26) aufweist, wobei die zweite zweite Eduktzuführung (26) im mittleren Bereich des zweiten Calcinatorabschnitts (20) angeordnet ist, wobei die zweite zweite Eduktzuführung (26) Edukt von oben in den Gasstrom des zweiten Calcinatorabschnitts (20) oder seitlich in den Gasstrom des zweiten Calcinatorabschnitts (20) zuführt.

7. Vorrichtung nach einem der vorstehenden Ansprüche, **dadurch gekennzeichnet, dass** am oberen Ende des zweiten Calcinatorabschnitts (20) eine zweite Brennstoffzufuhr (22) für einen festen Brennstoff angeordnet ist.

8. Vorrichtung nach einem der vorstehenden Ansprüche, **dadurch gekennzeichnet, dass** die untere Seite des zweiten Calcinatorabschnitts (20) stufenförmig ausgebildet ist.

9. Vorrichtung nach einem der vorstehenden Ansprüche, **dadurch gekennzeichnet, dass** die untere Seite des zweiten Calcinatorabschnitts (20) einen Vor- oder Rückschubrost aufweist.

10. Vorrichtung nach einem der vorstehenden Ansprüche, **dadurch gekennzeichnet, dass** der zweite Calcinatorabschnitt (20) einen Winkel $\alpha$ zwischen der Horizontalen und der Strömungsrichtung des zweiten Calcinatorabschnitts (20) aufweist, wobei der Winkel $\alpha$ zwischen 30 ° und 70 °, bevorzugt zwischen 35 ° und 60 °, weiter bevorzugt zwischen 40 ° und 55 °, besonders bevorzugt zwischen 40 ° und 50 °, liegt.

11. Vorrichtung nach einem der vorstehenden Ansprüche, **dadurch gekennzeichnet, dass** der zweite Calcinatorabschnitt (20) unterhalb des ersten Calcinatorabschnitts (10) angeordnet ist, wobei parallel zu zweiten Calcinatorabschnitt (20) ein regelbarer Bypass (40) angeordnet ist.

12. Verfahren zum Betreiben einer Vorrichtung zur thermischen Behandlung eines mineralischen Edukts, wobei das Verfahren in einer Vorrichtung mit einem Calcinator (110) mit einem senkrechten ersten Calcinatorabschnitt (10) und einem schrägen zweiten Calcinatorabschnitt (20) durchgeführt wird, wobei während des Betreibens ein Gasstrom durch den ersten Calcinatorabschnitt (10) und den zweiten Calcinatorabschnitt (20) geführt wird, wobei die Vorrichtung so betrieben wird, dass die Froude-Zahl, welche die Geschwindigkeitskomponente des Gasstroms in vertikaler Richtung dividiert durch die Wurzel aus dem Produkt der Erdbeschleunigung g mit dem hydraulischen Durchmesser ist, wobei der hydraulische Durchmesser des vierfache des Quotienten aus dem durchströmten Fläche quer zur Strömungsrichtung geteilt durch den durchströmten Umfang ist, wobei die Froude-Zahl an jeder Stelle des zweiten Calcinatorabschnitts (20) gleich oder größer ist als das Minimum der Froude-Zahl des ersten Calcinatorabschnittes (10).

13. Verfahren nach Anspruch 12, **dadurch gekennzeichnet, dass** die Froude-Zahl im zweiten Calcinatorabschnitt (20) größer als 0,7, bevorzugt größer als 2, gewählt wird, wobei die Froude-Zahl im zweiten Calcinatorabschnitt (20) kleiner als 9, bevorzugt kleiner als 4, gewählt wird.

14. Verfahren nach einem der Ansprüche 12 bis 13, **dadurch gekennzeichnet, dass** im zweiten Calcinatorabschnitt (20) Edukt an wenigstens zwei Positionen über eine erste zweite Eduktzuführung (24) und eine zweite zweite Eduktzuführung (26), welche entlang der Strömungsrichtung zueinander beabstandet sind, zugeführt wird.

15. Verfahren nach einem der Ansprüche 12 bis 14, **dadurch gekennzeichnet, dass** im zweiten Calcinatorabschnitt (20) ein fester Brennstoff mit einer Stückgröße von wenigstens 90 % der Masse des Brennstoffes von mehr als 50 mm, bevorzugt mehr als 70 mm, besonders bevorzugt von 100 mm, zugeführt wird.

16. Verfahren nach einem der Ansprüche 12 bis 15, **dadurch gekennzeichnet, dass** im ersten Calcinatorabschnitt (10) ein flugfähiger Brennstoff zugeführt wird, wobei im ersten Calcinatorabschnitt (10) über eine erste erste Eduktzuführung (14) Edukt zugeführt wird.

## Claims

1. An apparatus for thermal treatment of a mineral starting material, wherein the apparatus comprises a calciner (110), wherein the calciner (110) comprises at least a first calciner section (10) and a second calciner section (20), wherein the first calciner section (10) is arranged vertically, wherein the second calciner section (20) is arranged at an incline, wherein the second calciner section (20) has an angle $\alpha$ between the horizontal and the flow direction of the second calciner section (20), wherein the angle $\alpha$ is between 20° and 80°, wherein the first calciner section (10) has a first hydraulic diameter $d_{h,1}$, wherein the second calciner section (20) has a second hydraulic diameter $d_{h,2}$, wherein the second hydraulic diameter $d_{h,2}$ is less than or equal to the first hydraulic diameter $d_{h,1}$ multiplied by the sine of the angle $\alpha$.

2. The apparatus as claimed in claim 1, **characterized in that** the first calciner section (10) and the second calciner section (20) are configured to have a gas stream flow through them from bottom to top.

3. The apparatus as claimed in either of the preceding claims, **characterized in that** the first calciner section (10) is arranged below the second calciner section (20).

4. The apparatus as claimed in any of the preceding claims, **characterized in that** the apparatus comprises a third calciner section, wherein the third calciner section is arranged vertically, wherein the third calciner section is arranged above the second calciner section (20).

5. The apparatus as claimed in any of the preceding claims, **characterized in that** the second calciner section (20) has a first second starting material feed (24), wherein the first second starting material feed (24) is arranged in the lower 20% of the second calciner section (20), wherein the first second starting material feed (24) supplies starting material into the gas stream of the second calciner section (20) from above or into the gas stream of the second calciner section (20) from the side.

6. The apparatus as claimed in claim 5, **characterized in that** the second calciner section (20) has a second second starting material feed (26), wherein the second second starting material feed (26) is arranged in the middle region of the second calciner section (20), wherein the second second starting material feed (26) supplies starting material into the gas stream of the second calciner section (20) from above or into the gas stream of the second calciner section (20) from the side.

7. The apparatus as claimed in any of the preceding claims, **characterized in that** a second fuel feed (22) for a solid fuel is arranged at the upper end of the second calciner section (20).

8. The apparatus as claimed in any of the preceding claims, **characterized in that** the lower side of the second calciner section (20) is stepped.

9. The apparatus as claimed in any of the preceding claims, **characterized in that** the lower side of the second calciner section (20) has a forwards or backwards moving grate.

10. The apparatus as claimed in any of the preceding claims, **characterized in that** the second calciner section (20) has an angle $\alpha$ between the horizontal and the flow direction of the second calciner section (20), wherein the angle $\alpha$ is between 30° and 70°, preferably between 35° and 60°, more preferably between 40° and 55°, particularly preferably between 40° and 50°.

11. The apparatus as claimed in any of the preceding claims, **characterized in that** the second calciner section (20) is arranged below the first calciner section (10) and a controllable bypass (40) is arranged parallel to the second calciner section (20).

12. A process for operating an apparatus for thermal treatment of a mineral starting material, wherein the process is performed in an apparatus comprising a calciner (110) having a vertical first calciner section (10) and an inclined second calciner section (20), wherein during operation a gas stream is passed through the first calciner section (10) and the second calciner section (20), wherein the apparatus is operated such that the Froude number, which is the velocity component of the gas stream in the vertical direction divided by the square root of the product of acceleration due to gravity g and the hydraulic diameter, wherein the hydraulic diameter is four times the quotient of the flow cross section perpendicular to the flow direction divided by the flow circumference, wherein the Froude number at any point in the second calciner section (20) is equal to or greater than the minimum Froude number in the first calciner section (10).

13. The process as claimed in claim 12, **characterized in that** the Froude number in the second calciner section (20) is selected to be greater than 0.7, preferably greater than 2, wherein the Froude number in the second calciner section (20) is selected to be smaller than 9, preferably smaller than 4.

14. The process as claimed in any of claims 12 to 13, **characterized in that** in the second calciner section (20) starting material is supplied at at least two positions via a first second starting material feed (24) and a second second starting material feed (26) which are spaced apart from one another along the flow direction.

15. The process as claimed in any of claims 12 to 14, **characterized in that** a solid fuel with a chunk size of at least 90% of the mass of the fuel of more than 50 mm, preferably more than 70 mm, particularly preferably of 100 mm, is supplied in the second calciner section (20).

16. The process as claimed in any of claims 12 to 15, **characterized in that** an atomizable fuel is supplied in the first calciner section (10) and starting material is supplied via a first first starting material feed (14) in the first calciner section (10).

**Revendications**

1. Appareil pour le traitement thermique d'une matière première minérale, dans lequel l'appareil comprend un calcinateur (110), dans lequel le calcinateur (110) comprend au moins une première section de calcinateur (10) et une seconde section de calcinateur (20), dans laquelle la première section de calcinateur (10) est disposée verticalement, dans laquelle la seconde section de calcinateur (20) est disposée de manière inclinée, dans laquelle la deuxième section de calcinateur (20) présente un angle $\alpha$ entre l'horizontale et la direction d'écoulement de la deuxième section de calcinateur (20), dans laquelle l'angle $\alpha$ est compris entre 20° et 80°, dans laquelle la première section de calcinateur (10) présente un premier diamètre hydraulique $d_{h,1}$, dans laquelle la deuxième section de calcinateur (20) présente un deuxième diamètre hydraulique $d_{h,2}$, dans laquelle le deuxième diamètre hydraulique $d_{h,2}$ est inférieur ou égal au premier diamètre hydraulique $d_{h,1}$ multiplié par le sinus de l'angle $\alpha$.

2. l'appareil selon la revendication 1, **caractérisé par le fait que** la première section de calcinateur (10) et la seconde section de calcinateur (20) sont configurées pour être traversées par un flux de gaz de bas en haut.

3. l'appareil selon l'une des revendications précédentes, **caractérisé par le fait que** la première section de calcinateur (10) est disposée sous la deuxième section de calcinateur (20).

4. L'appareil selon l'une des revendications précédentes, **caractérisé en ce que** l'appareil comprend une troisième section de calcinateur, dans laquelle la troisième section de calcinateur est disposée verticalement, dans laquelle la troisième section de calcinateur est disposée au-dessus de la deuxième section de calcinateur (20).

5. l'appareil selon l'une des revendications précédentes, **caractérisé par le fait que** la deuxième section de calcinateur (20) a une première deuxième alimentation en matières premières (24), dans laquelle la première deuxième alimentation en matières premières (24) est disposée dans les 20 % inférieurs de la deuxième section de calcinateur (20), dans laquelle la première deuxième alimentation en matières premières (24) fournit des matières premières dans le flux de gaz de la deuxième section de calcinateur (20) par le haut ou dans le flux de gaz de la deuxième section de calcinateur (20) par le côté.

6. L'appareil selon la revendication 5, **caractérisé en ce que** la deuxième section de calcinateur (20) a une deuxième alimentation en matériau de départ (26), dans laquelle la deuxième alimentation en matériau de départ (26) est disposée dans la zone centrale de la deuxième section de calcinateur (20), dans laquelle la deuxième alimentation en matériau de départ (26) fournit du matériau de départ dans le flux de gaz de la deuxième section de calcinateur (20) par le haut ou dans le flux de gaz de la deuxième section de calcinateur (20) par le côté.

7. l'appareil selon l'une quelconque des revendications précédentes, **caractérisé par le fait qu'**une deuxième alimentation en combustible (22) pour un combustible solide est disposée à l'extrémité supérieure de la deuxième section de calcinateur (20).

8. l'appareil selon l'une quelconque des revendications précédentes, **caractérisé par le fait que** la face inférieure de la deuxième section de calcinateur (20) est étagée.

9. l'appareil selon l'une quelconque des revendications précédentes, **caractérisé par le fait que** la face inférieure de la deuxième section du calcinateur (20) comporte une grille se déplaçant vers l'avant ou vers l'arrière.

10. l 'appareil selon l'une quelconque des revendications précédentes, **caractérisé par le fait que** la deuxième section de calcinateur (20) présente un angle α entre l'horizontale et la direction d'écoulement de la deuxième section de calcinateur (20), l'angle α étant compris entre 30° et 70°, de préférence entre 35° et 60°, plus préférentiellement entre 40° et 55°, particulièrement préférentiellement entre 40° et 50°.

11. l'appareil selon l'une quelconque des revendications précédentes, **caractérisé en ce que** la deuxième section de calcinateur (20) est disposée sous la première section de calcinateur (10) et qu'une dérivation contrôlable (40) est disposée parallèlement à la deuxième section de calcinateur (20).

12. Procédé de fonctionnement d'un appareil de traitement thermique d'une matière première minérale, dans lequel le procédé est effectué dans un appareil comprenant un calcinateur (110) ayant une première section de calcinateur verticale (10) et une deuxième section de calcinateur inclinée (20), dans lequel, pendant le fonctionnement, un flux de gaz passe à travers la première section de calcinateur (10) et la deuxième section de calcinateur (20), dans lequel l'appareil fonctionne de telle sorte que le nombre de Froude, qui est la composante de vitesse du flux gazeux dans la direction verticale divisée par la racine carrée du produit de l'accélération due à la gravité g et le diamètre hydraulique, dans lequel le diamètre hydraulique est quatre fois le quotient de la section transversale de l'écoulement perpendiculaire à la direction de l'écoulement divisée par la circonférence de l'écoulement, dans lequel le nombre de Froude en tout point de la deuxième section de calcinateur (20) est égal ou supérieur au nombre de Froude minimum dans la première section de calcinateur (10).

13. procédé selon la revendication 12, **caractérisé par le fait que**
le nombre de Froude dans la deuxième section du calcinateur (20) est choisi pour être supérieur à 0,7, de préférence supérieur à 2, le nombre de Froude dans la deuxième section du calcinateur (20) étant choisi pour être inférieur à 9, de préférence inférieur à 4.

14. le procédé selon l'une des revendications 12 à 13, **caractérisé par le fait que** dans la deuxième section du calcinateur (20), le matériau de départ est fourni à au moins deux endroits par l'intermédiaire d'une première deuxième alimentation en matériau de départ (24) et d'une deuxième alimentation en matériau de départ (26) qui sont espacées l'une de l'autre le long de la direction de l'écoulement.

15. le procédé selon l'une des revendications 12 à 14, **caractérisé par le fait qu'**un combustible solide dont la taille des morceaux représente au moins 90 % de la masse du combustible et est supérieure à 50 mm, de préférence supérieure à 70 mm, de préférence encore supérieure à 100 mm, est fourni dans la deuxième section du calcinateur (20).

16. Procédé selon l'une des revendications 12 à 15, **caractérisé par le fait qu'**un combustible atomisable est fourni dans la première section du calcinateur (10) et que le matériau de départ est fourni par une première alimentation en matériau de départ (14) dans la première section du calcinateur (10).

100

130    120

110

Fig. 1

30

34

32

22

24

20

10

12    14

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018206673 A1
- DE 102018206674 A1
- DE 3735825 A1